# FASCICULE DE BREVET EUROPEEN

(11) **EP 1 232 127 B1**
(45) Date de publication et mention de la délivrance du brevet: **17.12.2003**
(21) Numéro de dépôt: 00942096.9
(22) Date de dépôt: 19.06.2000
(51) Int. Cl.: C03C 17/34

(54) **COUCHE PYROLYTIQUE D'OXYNITRURE D'ALUMINIUM ET VITRAGE COMPORTANT CETTE COUCHE**
PYROLYTISCHE ALUMINIUMOXYNITRIDSCHICHT UND VERGLASUNG MIT DIESER SCHICHT
PYROLYTIC LAYER OF ALUMINIUM OXYNITRIDE AND GLAZING COMPRISING SAME

(30) Priorité: 20.07.1999 LU 90420
(43) Date de publication de la demande: 21.08.2002
(73) Titulaire: Glaverbel, 1170 Bruxelles (Watermael-Boitsfort) (BE)
(72) Inventeur: LEGRAND, Philippe, F-59600 Vieux Reng (FR)
(74) Mandataire: Farmer, Guy
(86) Numéro de dépôt international: EP0005615
(87) Numéro de publication internationale: WO01005723

(56) Documents cités:
- EP-A- 0 640 849
- DE-C- 3 908 643
- ASPAR B ET AL: "Organometallic chemical vapour deposition in the Al-O-N system" 8TH COLLOQUIUM FOR THE STUDY OF NITRIDES, SAINT-ETIENNE, FRANCE, 11-12 OCT. 1990, vol. 8, no. 4, pages 251-256, XP002134840 Journal of the European Ceramic Society, 1991, UK ISSN: 0955-2219
- ASPAR B ET AL: "Chemical vapour deposition of the Al-O-N system" EIGHTH EUROPEAN CONFERENCE ON CHEMICAL VAPOUR DEPSITION, GLASGOW, UK, 9-13 SEPT. 1991, vol. 1, no. C2, pages 665-672, XP002134841 Journal de Physique IV (Colloque), Sept. 1991, France ISSN: 1155-4339

## Description

L'invention est relative aux couches minces déposées sur un substrat transparent verrier pour en modifier les caractéristiques optiques. En particulier l'invention vise les couches minces interposées entre le substrat verrier et une autre couche mince fonctionnelle, notamment antisolaire ou basse-émissive.

Il est bien connu que la présence d'une couche basse-émissive ou antisolaire, présentant notamment les épaisseurs et indices les plus adéquats pour leur efficacité comme pour leur application industrielle, donne lieu à des colorations parasites, en particulier en réflexion. Ces colorations qui se manifestent sous forme d'irisations doivent impérativement être supprimées pour les usages habituels, et tout particulièrement pour les verres clairs où leur présence est très nuisible à l'apparence des ces vitrages comportant de tels verres.

Pour éviter ces phénomènes il est bien connu d'interposer entre la couche fonctionnelle et le substrat verrier, une "sous-couche" dont l'indice et l'épaisseur sont choisis pour atténuer ou pratiquement faire disparaître ces irisations. La théorie permet de déterminer de manière précise les valeurs appropriées pour ces paramètres. La pratique rencontre cependant quelques difficultés dans la mise en oeuvre en raison des multiples contraintes techniques auxquelles la production industrielle doit répondre pour réaliser ces sous-couches de façon efficace et économique.

Si différentes solutions ont été proposées pour la réalisation de ces sous-couches, l'usage le plus répandu est celui de sous couches à base de silice.

Les techniques de dépôt les plus avantageuses du point de vue économique pour la formation de ces sous-couches, font appel à la pyrolyse, et plus particulièrement à la pyrolyse en phase gazeuse (CVD). Dans ces techniques le dépôt de silice à partir de précurseurs gazeux, tels que les silanes, s'effectue habituellement en continu directement sur le ruban de verre alors que celui-ci vient d'être produit. Les conditions de température du verre permettent la réaction de pyrolyse des précurseurs qui sont conduits à son contact. Le choix de procéder dans ces conditions implique cependant des contraintes liées aux particularités de l'ensemble dans lequel l'opération de dépôt vient s'intégrer.

Le dépôt des sous-couches dans les conditions qui viennent d'être rappelées, doit s'effectuer rapidement. Le ruban de verre à revêtir défile sous des buses qui conduisent les précurseurs à son contact. Le temps de contact gaz/verre, indépendamment des aménagements de l'installation, est nécessairement limité. Il faut donc utiliser des précurseurs très réactifs pour atteindre l'épaisseur de dépôt pendant ce temps très bref. Les précurseurs des couches de silice offrent une très grande réactivité dans les conditions de température qui sont celles du ruban de verre sortant du bain d'étain fondu.

Les techniques antérieures mettant en oeuvre des sous-couches à base de silice présentent cependant quelques inconvénients. En particulier, les précurseurs de silice conduisent à un encrassement rapide des installations.

Les buses de dépôt sont disposées à proximité immédiate du ruban de verre pour assurer un bon contact, et par suite un bon rendement de réaction. La distance séparant le ruban, de verre de la, ou des buses n'est généralement que de quelques mm. Dans ces conditions, les dépôts parasites de réactifs sur les structures avoisinant la buse, atteignent rapidement des dimensions qui nécessitent un nettoyage, faute de quoi, la présence de dépôts parasites entraîne des perturbations dans les écoulements des gaz, conduisant à des inhomogénéités sur la couche. Si l'encrassement se prolonge, le verre peut même frotter sur les concrétions formées, conduisant à des taches et des rayures inacceptables. Dans l'état actuel les nettoyages imposent l'interruption de la production à intervalles réguliers, ce qui contrarie d'autant plus le bon rendement de l'opération, que ces nettoyages sont plus fréquents.

La sous-couche doit par ailleurs présenter des propriétés, notamment d'indice de réfraction, bien contrôlées pour tenir compte des spécificités des couches dont elles corrigent les inconvénients rappelés précédemment. Les caractéristiques précises des couches à base de silice sont difficiles à maîtriser. Différentes propositions ont été faites pour atteindre un indice bien défini, sans avoir abouti à une technique parfaitement satisfaisante.

Pour les raisons indiquées ci-dessus, il est souhaité de pouvoir disposer de nouvelles sous-couches répondant mieux aux besoins de la pratique. C'est le but de l'invention de fournir de telles sous-couches. En particulier l'invention se propose de fournir des sous-couches dont la formation est bien contrôlable même lorsqu'on opère par CVD, sans que cette maîtrise ne soit préjudiciable à la rapidité de la réaction.

L'invention propose de disposer comme sous-couche sur un substrat verrier, une couche transparente à base d'oxynitrure d'aluminium déposée par une technique de pyrolyse en phase gazeuse. Par oxynitrure d'aluminium on désigne le produit à base d'aluminium d'azote et d'oxygène dans les proportions variables qui sont précisées dans la suite. L'analyse des couches au microscope électronique à balayage (MEB) ne fait apparaître aucun défaut d'homogénéité à des résolutions inférieures au dixième de micron. Pour les applications envisagées, la couche se présente donc comme constituée d'un composé parfaitement homogène, indépendamment de sa formule atomique de type AlNₓO_{Y}, dans laquelle x et y peuvent varier de façon sensible comme indiqué plus loin.

L'utilisation de couches minces à base de nitrures d'aluminium à fait l'objet de nombreuses publications. Les principales applications de ce type de couches ont pour objet l'amélioration des propriétés de résistance à l'usure du substrat sur lequel elles sont déposées. Ces couches sont relativement épaisses et n'ont pas de caractéristiques optiques particulières.

D'autres couches à base de nitrures d'aluminium ont été proposées, appliquées à des vitrages, pour servir de protection à une couche fonctionnelle sous-jacente, principalement réfléchissante. Il s'agit par exemple de protéger une couche à base de TiN ou d'Ag de l'oxydation.

Il a été également proposé dans une technique de dépôt sous vide, d'utiliser une couche, notamment à base de nitrure d'aluminium, sur le substrat verrier, pour protéger une couche de nitrure de titane déposée ultérieurement. Dans ce cas la couche est d'une épaisseur très réduite, au maximum quelques nanomètres (EP-A 536607).

La littérature antérieure fait encore état de l'utilisation d'assemblages de couches réfléchissantes, particulièrement métalliques, associées à des couches absorbantes de nature variée, dont du nitrure d'aluminium, le tout déposé sous vide, pour former des vitrages avec des propriétés antisolaires.

Les couches d'oxyde d'aluminium sont connues pour leurs propriétés de dureté mécanique et leur inertie chimique. Des études ont également été conduites pour former par pyrolyse gazeuse des couches minces pour lesquelles l'indice réfraction a été déterminé (Journal of Electronic Material vol.17, n°6,p 509-517). Les indices de réfraction des couches obtenues sont de 1,62 à 1,63. Ces indices sont inférieurs à ceux qui sont préférés pour produire l'atténuation recherchée selon l'invention, au moins lorsqu'une seule sous-couche est mise en oeuvre. La littérature propose aussi de constituer des assemblages comportant au moins deux sous-couches d'indices étagés pour prévenir les irisations Par ailleurs les couches d'oxyde d'aluminium antérieures ont été produites dans des conditions très particulières en laboratoire. Les réactions de formation de ces couches, à partir de triméthyl aluminium (TMA), sont très difficilement contrôlables. Même en laboratoire, la réaction se développe pour une part très importante dans la phase gazeuse, et la poudre d'alumine résultante, doit faire l'objet de mesures spécifiques, pour éviter qu'elle se dépose sur la plaque de verre servant de substrat sous forme d'amas étrangers à la couche. Si l'on ajoute que la vitesse de formation de la couche, indépendamment des précautions prises, reste relativement faible (au mieux quelques nanomètres par seconde), on voit que de telles couches sont loin de satisfaire les exigences rappelées précédemment.

L'invention propose d'utiliser des couches à base d'oxynitrure d'aluminium, produites par pyrolyse en phase gazeuse, sur un substrat verrier, pour atténuer les couleurs en réflexion produites par une couche d'oxyde conférant des propriétés basse-émissive et/ ou antisolaire, couche qui est disposée sur celle d'oxynitrure d'aluminium.

Les couches d'oxynitrures d'aluminium utilisées selon l'invention ont des compositions variables qui dépendent des conditions d'application. De façon avantageuse, notamment pour obtenir les indices de réfraction les plus satisfaisants, les proportions atomiques des constituants de ces couches sont les suivantes :

| | |
|---|---|
| Al | de 40 à 50 % |
| N | de 20 à 50% |
| O | de 10 à 60 % |

De façon particulièrement préférée la composition des couches selon l'invention est :

| | |
|---|---|
| Al | de 45 à 50% |
| N | de 22 à 30% |
| O | de 20 à 27% |

Les couches d'oxynitrure d'aluminium selon l'invention présentent un indice de réfraction variable selon leur composition, et les conditions d'obtention. Il se situe entre environ 1,6 et 1,8. Pour les utilisations envisagées, c'est à dire comme sous-couche d'une couche basse-émissive et/ou antisolaire, la couche doit présenter un indice intermédiaire entre celui du substrat et celui de la couche qui lui est superposée. De façon préférée l'indice de la couche d'oxynitrure d'aluminium est compris entre 1,65 et 1,75, en particulier lorsque la couche basse-émissive ou antisolaire est une couche à base d'oxyde d'étain.

Pour obtenir l'effet anti-irisation les couches selon l'invention doivent avoir une épaisseur qui dépend en partie de leur indice, et de ceux du substrat et de la couche basse-émissive ou antisolaire. Fonction de cet indice, l'épaisseur des couches est avantageusement comprise entre 50 et 90 nanomètres, et de préférence entre 65 et 85 nanomètres.

Les couches selon l'invention peuvent contenir des éléments autres que Al, N, et O, en faibles proportions. Ces éléments sont normalement des impuretés introduites avec les précurseurs, ou des résidus des réactions de pyrolyse, ou encore proviennent du substrat lui même.

Dans la production des couches, lorsqu'on utilise le trichlorure d'aluminium comme précurseur, un élément résiduel possible est le chlore. La présence de chlore dans la couche n'est pas souhaitée. La teneur résiduelle en chlore dans les couches selon l'invention est aussi faible que possible, et avantageusement reste inférieure à 4%.

La couche selon l'invention, peut également contenir des éléments alcalins, et notamment du sodium provenant du substrat par diffusion. On constate à l'expérience que les teneurs en sodium restent très faibles et normalement inférieures à 1 %. Cette faible teneur conduit comme nous l'indiquerons plus loin, à des couches résistantes dans les essais traditionnels effectués sur ce type de couches.

Les couches selon l'invention sont déposées par pyrolyse gazeuse. Avantageusement celle-ci est effectuée directement sur le ruban de verre à l'intérieur de l'enceinte du "float", ou immédiatement à la sortie de celle-ci. L'opération dans ces conditions est conduite en continu.

Le choix d'opérer directement sur la ligne de production détermine dans une large mesure les conditions de température de la pyrolyse. En pratique, aux emplacements indiqués la température est comprise normalement entre 600 et 730°C.

Les précurseurs utilisés doivent satisfaire un ensemble d'exigences. Ils doivent pouvoir réagir de façon satisfaisante dans les conditions de mise en oeuvre. Leur réactivité doit être suffisante pour pouvoir conduire à des couches relativement épaisses en un temps très bref. Elle ne doit pas cependant être telle qu'elle conduise à des réactions parasites gênantes, comme des réactions en phase gazeuse avant le contact avec le verre. Les précurseurs doivent aussi pouvoir être commodément mis sous forme gazeuse pour être transportés jusqu'au substrat dans des conditions facilement réalisables industriellement. Pour les composés liquides, ou solides, à la température ordinaire, il est important que la vaporisation soit suffisante à une température pas trop élevée pour permettre un transport jusqu'aux buses de pyrolyse sans risque de condensation dans les canalisations.

D'autres exigences s'appliquent encore aux précurseurs. Il va de soi que ces produits doivent être aussi peu coûteux que possible, même si ils sont mis en oeuvre en très faibles quantités,. Ils ne doivent pas présenter une toxicité qui les rendraient inutilisables en milieu industriel dans les conditions habituelles de traitement envisagées.

Compte tenu de ces exigences, les inventeurs ont montré qu'il est avantageux d'utiliser le trichlorure d'aluminium. Le triméthyl-aluminium (TMA) qui est un précurseur potentiel satisfait bien aux exigences de réactivité. Il présente l'inconvénient d'une grande inflammabilité. Son emploi requiert donc de prendre des dispositions plus contraignantes.

Dans la suite il est fait référence au trichlorure d'aluminium, mais ceci n'exclue pas l'usage selon l'invention d'autres précurseurs d'aluminium, notamment de TMA.

Le trichlorure d'aluminium est suffisamment volatile lorsque la température dépasse 150°C. Il est sensible à l'eau et doit donc être placé, ou préparé, en milieu essentiellement anhydre. En pratique, selon l'invention il est avantageux de procéder à la formation du trichlorure d'aluminium au moment de son utilisation. Ceci est conduit dans un dispositif de type chlorinateur.

La formation de nitrure comporte aussi la mise en oeuvre d'un réactif azoté. Avec le chlorure d'aluminium, les inventeurs utilisent avantageusement l'ammoniac, le fluorure d'azote NF₃ ou des amines. Parmi les amines utilisables pour la formation des couches selon l'invention on préfère les amines de masse moléculaire relativement faible comme la méthylamine, l'éthylamine, la propylamine et la diméthylamine. Le choix de l'un ou l'autre des précurseurs de nitrure permet d'ajuster la réactivité en fonction notamment de la température de pyrolyse.

Les précurseurs sont mélangés à un gaz vecteur qui est inerte vis à vis des précurseurs dans les conditions de la réaction. Ce gaz vecteur est avantageusement de l'azote.

Lorsqu'on utilise le trichlorure d'aluminium comme précurseur, la présence d'eau, influe sur la composition et les caractéristiques optiques de la couche. La teneur en eau est un des facteurs qui déterminent les proportions d'oxygène et d'azote dans la couche formée, et par suite l'indice de la couche. Il est donc possible d'ajuster la nature et les caractéristiques par le biais de la teneur en eau.

Les sous-couches d'oxynitrure d'aluminium sont utilisées avantageusement dans les vitrages dont la couche basse-émissive, ou antisolaire, est une couche d'oxyde du type oxyde d'étain, oxyde d'indium...Ces oxydes, selon la pratique dans ce domaine, sont également avantageusement dopés. L'oxyde d'étain peut ainsi être dopé au fluor et l'oxyde d'indium peut être dopé à l'étain. Il peut encore s'agir d'une couche d'étain contenant de l'antimoine suivant l'enseignement des publications BE-A 1010321 et 1010322.

Pour les vitrages comportant une couche d'étain contenant de l'antimoine, la proportion atomique Sb/Sn est avantageusement comprise entre 0,02 et 0,15, et de préférence entre 0,05 et 0,12%.

Le dépôt de la couche fonctionnelle est avantageusement effectué également par une technique de pyrolyse gazeuse. Dans ce cas il est préféré de faire suivre le dépôt de la sous-couche immédiatement par celui de la couche fonctionnelle. Lorsque la sous-couche est produite dans l'enceinte du float, le dépôt de la couche peut suivre immédiatement, soit dans le float soit à la sortie de celui-ci. Les conditions de température et d'environnement permettent ces deux types de combinaison.

L'invention est décrite de façon détaillée dans les exemples de réalisation suivants.

Dans tous les exemples donnés le précurseur d'aluminium est le trichlorure d'aluminium. Il est vaporisé par sublimation à 150°C (145°C pour l'exemple 2), et entraîné dans un courant d'azote à cette même température. La teneur du chlorure dans l'azote est fixé à 1 %, et le débit d'azote est de 5 litres normalisés par minute.

De l'ammoniac est mélangé, également à de l'azote comme gaz porteur. La proportion d'ammoniac utilisée est très supérieure à celle théoriquement nécessaire pour réagir avec le chlorure. Dans les exemples suivants, à l'exception de l'exemple 3, le débit d'ammoniac est réglé dans l'installation pilote à 0,5 litre normalisé (SL) par minute. Le débit d'azote porteur est de 20 litres normalisés par minute, sauf également pour l'exemple 3. Pour ce dernier, les débits respectifs sont de 15 SL d'azote et 5 SL d'ammoniac.

La teneur en eau est extrêmement faible. Dans les exemples 1 à 8, elle équivaut à un débit de 0,02 SL par minute, et pour l'exemple 9, de 0,13 SL.

Dans tous les exemples le temps de contact du gaz avec le verre chaud est de 5s.

Le tableau suivant indique pour chaque essai :
- la température du verre;
- l'indice moyen, n_{R}, mesuré par réflectométrie;
- l'épaisseur, e_{R}, déterminée par réflectométrie;
- l'indice, nₑ, déterminé par ellipsométrie pour la longueur d'onde de 550nm;
- l'épaisseur, eₑ, déterminée par ellipsométrie;
- les pourcentages atomiques des constituants des couches.

| N° | t C° | n_{R} | e_{R} (nm) | nₑ 550nm | eₑ (nm) | Al(at%) | N(at%) | O(at%) |
|---|---|---|---|---|---|---|---|---|
| 1 | 700 | 1,69 | 75 | 1,71 | 79,7 | 47 | 23 | 25 |
| 2 | 700 | 1,71 | 75 | - | - | - | - | - |
| 3 | 700 | 1,69 | 115 | 1,66 | 129,4 | | | |
| 4 | 730 | 1,76 | 75 | 1,76 | 76,8 | 48 | 28 | 18 |
| 5 | 680 | 1,68 | 67 | 1,69 | 68,1 | 46 | 22 | 30 |
| 6 | 650 | 1,67 | 67 | - | - | 46 | 17 | 35 |
| 7 | 600 | - | - | - | - | - | - | - |
| 8 | 700 | 1,71 | 88 | 1,71 | 80,5 | 48 | 26 | 22 |
| 9 | 700 | - | 14 | - | - | 47 | 17 | 32 |

Il faut d'abord remarquer que la couche produite sur le verre à 600°C ne permet pas une détermination adéquate de ses caractéristiques. Pour la production envisagée cette valeur de température, dans les conditions de l'essai, constitue la limite en dessous de laquelle il n'est pas possible d'avoir une couche acceptable. La couche est trop voilée compte tenu de la transparence requise.

En se reportant aux différentes températures mises en oeuvre, on constate, quelle que soit la méthode de mesure, que l'indice croît avec la température de pyrolyse. En réflectométrie il passe de 1,67 à 650°C, à 1,76 à 730°C; ou, en ellipsométrie, de 1,44 à 1,76 pour les mêmes températures. Les raisons de cette évolution ne sont pas complètement élucidées. On constate cependant que ces différences suivent aussi des différences dans les proportions des éléments constitutifs, ce qui tend à montrer que les mécanismes réactionnels sont déplacés par l'accroissement de température.

Les analyses dont les résultats figurent aussi dans le tableau, montrent que la teneur en azote de la couche va croissant avec la température.

A l'inverse, si l'on accroît la teneur en eau, comme dans l'exemple 9, on favorise la présence d'oxygène dans la couche, et l'indice tend à diminuer.

La structure de la couche n'est pas parfaitement élucidée. La diffraction X montre la présence d'une structure d'apparence cristalline de AlN. L'étude microscopique des couches, comme indiqué précédemment, ne révèle aucun défaut d'homogènéité aux résolutions utilisées. Quoiqu'il en soit, l'important pour la mise en oeuvre de l'invention est de disposer, par le biais de la température, d'un moyen de réglage de l'indice de la sous-couche.

On constate aussi que la vitesse de dépôt augmente avec la température en passant par un maximum pour une température de l'ordre de 700°C. Dans l'ensemble, à l'exclusion des exemples 7 et 9, la vitesse de dépôt est d'un ordre de grandeur satisfaisant pour pouvoir réaliser les couches d'indice et d'épaisseur convenant à l'atténuation des irisations.

L'influence de la concentration d'ammoniac est abordée à l'exemple 3. Dans cet exemple l'excès très important de ce précurseur par rapport à celui d'aluminium, conduit principalement à un accroissement sensible de la vitesse de dépôt. La nature globale de la couche ne paraît pas modifiée, et l'indice de réfraction est pratiquement inchangé par rapport à celui du dépôt servant de référence réalisé à la même température avec les proportions de précurseurs.

Des vitrages selon l'invention, comportant une sous-couche d'oxynitrure d'aluminium et une couche antisolaire, ont également été produits. Dans ces essais la couche fonctionnelle est une couche d'étain contenant de l'antimoine. Ces couches sont du type de celles décrites dans les publications de brevet belge précitées.

Une première série d'essais compare les couches antisolaires formées directement sur le verre, et celles formées sur la sous-couche d'oxynitrure d'aluminium. Dans ces essais la sous-couche est déposée à 700°C dans les conditions de l'exemple 8 ci-dessus. Le dépôt de la couche d'étain dopée à l'antimoine est effectué immédiatement après la formation de la sous-couche, à une température de 600°C à l'aide des précurseurs SnCl₄ et SbCl₅. La réaction est conduite en présence de vapeur d'eau.

Pour obtenir des conditions parfaitement identiques pour le dépôt de la couche d'étain contenant l'antimoine, une moitié du verre est masquée pendant le dépôt de la sous-couche, et le verre est exposé dans sa totalité pendant la formation de la couche.

De manière surprenante on constate que les deux parties des couches d'étain contenant l'antimoine ne sont pas identiques. La partie de la couche déposée sur la sous-couche est plus épaisse que celle qui se forme directement sur le verre. En d'autre termes, la présence de la sous-couche semble faciliter le dépôt de la couche d'étain. Cette amélioration est de l'ordre de 10%. A titre indicatif, un dépôt simultané sur une feuille de verre en partie revêtue d'une sous-couche d'oxynitrure d'aluminium conduit à des épaisseurs respectives de 250 et 286 nanomètres. En dehors de la variation d'épaisseur, les propriétés des deux couches d'étain contenant de l'antimoine sont identiques. En particulier, la présence de la sous-couche n'entraîne pas la formation de voile et atténue les irisations qui se manifestent sur la partie ne comportant que l'oxyde d'étain contenant l'antimoine.

Dans une deuxième série d'essais, différentes sous-couches ont été produites sur lesquelles une couche d'oxyde d'étain et d'antimoine est appliquée, toujours par pyrolyse gazeuse. La couche d'oxyde d'étain et d'antimoine est systématiquement de 350 nanomètres d'épaisseur. Les épaisseurs et indices des sous-couches sont indiqués, ainsi que les indices colorimétriques en réflexion selon le CIE pour chaque vitrage constitué. Les résultats sont donnés dans le tableau suivant :

| | nₑ | eₑ (nm) | a | b |
|---|---|---|---|---|
| 10 | 1,71 | 75 | -3,93 | -0,93 |
| 11 | 1,70 | 80 | -2,33 | 2,33 |
| 12 | 1,72 | 75 | 1,28 | 1,64 |
| 13 | 1,71 | 73 | -7,78 | 3,85 |

Les résultats montrent que l'atténuation des réflexions parasites au moyen de la sous couche d'oxynitrure d'aluminium est convenablement assuré en choisissant l'épaisseur et l'indice de la sous-couche par le biais de la température de dépôt, mais aussi en modifiant les proportions des réactifs précurseurs. Une valeur communément admise comme acceptable pour l'atténuation répond à la condition (a²+b²)^{1/2} < 10. Cette condition est remplie pour tous les exemples figurant dans le tableau. On remarque cependant que cette condition, et donc l'atténuation, sont très sensibles aux caractéristiques de la couche.

Par ailleurs on a vérifié la bonne tenue à la corrosion et à l'abrasion des vitrages selon l'invention de même que leur bonne tenue dans les traitement de bombage et de trempe.

On dispose ainsi grâce à l'invention d'une alternative satisfaisante aux techniques antérieures pour la production de vitrages bas-émissifs/antisolaires qui ne présentent pas de phénomènes indésirable d'irisation en réflexion. En particulier grâce à l'invention, il est possible de contrôler avec précision les caractéristiques des sous-couches, et tout spécialement leur indice, par le choix notamment de la température de pyrolyse des précurseurs de cette sous-couche.

Enfin la mise en oeuvre des couches selon l'invention n'est pas gênée par les phénomènes d'encrassement reconnus dans les techniques antérieures. On dispose donc de moyens particulièrement avantageux d'un point de vue industriel pour la production des vitrages en question.

## Revendications

1. Vitrage comprenant un substrat verrier revêtu d'une couche d'oxynitrure d'aluminium, déposée par pyrolyse en phase gazeuse, et dont les caractéristiques d'épaisseur et d'indice sont choisies de manière à atténuer les couleurs en réflexion produites par une couche d'oxyde conférant au vitrage des propriétés basse-émissive et/ou antisolaire, couche qui est disposée sur la couche d'oxynitrure d'aluminium.

2. Vitrage selon la revendication 1, dans lequel les éléments constitutifs de la couche d'oxynitrure d'aluminium, sont respectivement dans les teneurs atomiques:
| | |
|---|---|
| Al | de 40 à 50% |
| N | de 20 à 50% |
| O | de 10 à 60% |

3. Vitrage selon la revendication 2, dans lequel les éléments constitutifs de la couche d'oxynitrure d'aluminium, sont respectivement dans les teneurs atomiques:
| | |
|---|---|
| Al | de 45 à 50% |
| N | de 22 à 30% |
| O | de 20 à 27% |

4. Vitrage selon l'une des revendications précédentes dans lequel l'indice de réfraction de la couche d'oxynitrure d'aluminium, est compris entre 1,6 et 1,8.

5. Vitrage selon la revendication 4, dans lequel l'indice de réfraction de la couche d'oxynitrure d'aluminium, est compris entre 1,65 et 1,75.

6. Vitrage selon l'une des revendications précédentes, dans lequel l'épaisseur de la couche d'oxynitrure d'aluminium, présente une épaisseur comprise entre 500 et 900 angströms.

7. Vitrage selon la revendication 6, dans lequel l'épaisseur de la couche d'oxynitrure d'aluminium, présente une épaisseur comprise entre 650 et 850 angströms.

8. Vitrage selon l'une des revendications précédentes, dans lequel la couche d'oxyde conférant les propriétés basse-émissive et/ou antisolaire est une couche à base d'oxyde d'étain dopé.

9. Vitrage selon l'une des revendications précédentes, dans lequel la couche d'oxyde est une couche d'oxyde d'étain contenant de l'oxyde d'antimoine , le rapport atomique Sb/Sn étant compris entre 0,02 et 0,15

10. Vitrage selon l'une des revendications précédentes, dans lequel la couche d'oxyde est une couche d'oxyde d'étain dopée au fluor.

11. Procédé de production d'un vitrage selon l'une des revendications précédentes, dans lequel la couche d'oxynitrure d'aluminium, est formée par pyrolyse à partir de précurseurs gazeux comprenant du trichlorure d'aluminium ou du trimétyl-aluminium.

12. Procédé de production d'un vitrage selon la revendication 11, dans lequel les précurseurs gazeux comprennent aussi de l'ammoniac.

13. Procédé de production d'un vitrage selon l'une des revendications 11 ou 12, dans lequel, lorsque le précurseur d'aluminium est le chlorure d'aluminium, les précurseurs contiennent encore de la vapeur d'eau.

## Patentansprüche

1. Glasscheibe, umfassend ein Glassubstrat mit einer darauf angeordneten Aluminiumoxynitridschicht, abgeschieden durch Gasphasenpyrolyse, wobei deren Dickeneigenschaften und Indexeigenschaften derart ausgewählt sind, die Farben, erzeugt bei Reflexion durch eine Oxidschicht, welche der Glasscheibe Eigenschaften niedrigen Emissionsvermögens und/oder Antisolareigenschaften verleiht, abzuschwächen, wobei die Schicht auf der Aluminiumoxynitridschicht abgeschieden ist.

2. Glasscheibe nach Anspruch 1, wobei die die Aluminiumoxynitridschicht aufbauenden Elemente in den entsprechenden atomaren Anteilen vorhanden sind:
| | |
|---|---|
| Al | von 40 bis 50% |
| N | von 20 bis 50% |
| O | von 10 bis 60%. |

3. Glasscheibe nach Anspruch 2, wobei die die Aluminiumoxynitridschicht aufbauenden Elemente in den entsprechenden atomaren Anteilen vorhanden sind:
| | |
|---|---|
| Al | von 45 bis 50% |
| N | von 22 bis 30% |
| O | von 20 bis 27%. |

4. Glasscheibe nach einem der vorhergehenden Ansprüche, wobei der Brechungsindex der Aluminiumoxynitridschicht zwischen 1,6 und 1,8 liegt.

5. Glasscheibe nach Anspruch 4, wobei der Brechungsindex der Aluminiumoxynitridschicht zwischen 1,65 und 1,75 liegt.

6. Glasscheibe nach einem der vorhergehenden Ansprüche, wobei die Dicke der Aluminiumoxynitridschicht zwischen 500 und 900 Å liegt.

7. Glasscheibe nach Anspruch 6, wobei die Dicke der Aluminiumoxynitridschicht zwischen 650 und 850 Å liegt.

8. Glasscheibe nach einem der vorhergehenden Ansprüche, wobei die Oxidschicht, welche die Eigenschaften niedrigen Emissionsvermögens und/oder Antisolareigenschaften verleiht, eine dotierte Schicht auf Basis von Zinnoxid ist.

9. Glasscheibe nach einem der vorhergehenden Ansprüche, wobei die Oxidschicht eine Zinnoxidschicht ist, die Antimonoxid enthält, wobei das Atomverhältnis Sb/Sn zwischen 0,02 und 0,15 liegt.

10. Glasscheibe nach einem der vorhergehenden Ansprüche, wobei die Oxidschicht eine mit Fluor dotierte Zinnoxidschicht ist.

11. Verfahren zur Herstellung einer Glasscheibe nach einem der vorhergehenden Ansprüche, wobei die Aluminiumoxynitridschicht durch Pyrolyse eines gasförmigen Vorläufers, umfassend Aluminiumtrichlorid oder Trimethylaluminium, gebildet wird.

12. Verfahren zur Herstellung einer Glasscheibe nach Anspruch 11, wobei der gasförmige Vorläufer auch Ammoniak umfaßt.

13. Verfahren zur Herstellung einer Glasscheibe nach einem der Ansprüche 11 oder 12, wobei, wenn der Aluminiumvorläufer Aluminiumchlorid ist, die Vorläufer noch Wasserdampf enthalten.

## Claims

1. Glazing comprising a glass substrate coated with a layer of aluminium oxynitride deposited by gas-phase pyrolysis, the thickness and refractive index characteristics thereof being selected so as to attenuate the reflected colours produced by an oxide layer providing the glazing with low-emission and/or solar protection properties, said layer being deposited onto the aluminium oxynitride layer.

2. Glazing according to Claim 1, wherein the constituent elements of the aluminium oxynitride layer are respectively in the following atomic proportions:
| | |
|---|---|
| Al | from 40 to 50% |
| N | from 20 to 50% |
| O | from 10 to 60%. |

3. Glazing according to Claim 2, wherein the constituent elements of the aluminium oxynitride layer are respectively in the following atomic proportions:
| | |
|---|---|
| Al | from 45 to 50% |
| N | from 22 to 30% |
| O | from 20 to 27%. |

4. Glazing according to one of the preceding claims, wherein the refractive index of the aluminium oxynitride layer is in the range of between 1.6 and 1.8.

5. Glazing according to Claim 4, wherein the refractive index of the aluminium oxynitride layer is in the range of between 1.65 and 1.75.

6. Glazing according to one of the preceding claims, wherein the thickness of the aluminium oxynitride layer has a thickness in the range of between 500 and 900 ångströms.

7. Glazing according to Claim 6, wherein the thickness of the aluminium oxynitride layer has a thickness in the range of between 650 and 850 ångströms.

8. Glazing according to one of the preceding claims, wherein the oxide layer providing the low-emission and/or solar protection properties is a layer based on doped tin oxide.

9. Glazing according to one of the preceding claims, wherein the oxide layer is a tin oxide layer containing antimony oxide, the atomic ratio Sb/Sn being in the range of between 0.02 and 0.15.

10. Glazing according to one of the preceding claims, wherein the oxide layer is a layer based on fluorine-doped tin oxide.

11. Process for the production of glazing according to one of the preceding claims, wherein the aluminium oxynitride layer is formed by pyrolysis using gaseous precursors comprising aluminium trichloride or trimethyl aluminium.

12. Process for the production of glazing according to Claim 10, wherein the gaseous precursors also comprise ammonia.

13. Process for the production of glazing according to one of Claims 11 or 12, wherein, when the aluminium precursor is aluminium chloride, the precursors also contain water vapour.
